# EUROPEAN PATENT APPLICATION

(11) **EP 4 840 370 A1**
(43) Date of publication of application: **18.11.2026**
(21) Application number: 26178379.9
(22) Date of filing: 12.05.2026
(51) Int. Cl.: A47J 31/42, A47J 42/50

(54) **COFFEE MACHINE**

(30) Priority: 13.05.2025 PL 45202825
(71) Applicant: BSH Hausgeräte GmbH, 81739 München (DE)
(72) Inventor: Thies, Manuel, 84574 Taufkirchen (DE); Reichel, Thomas, 83278 Traunstein (DE)

(57) **Abstract**

A coffee machine (10) comprising a coffee container (11), a grinder (12), and a brewing unit (13), wherein the coffee machine (10) comprises a humidifying chamber (14) and a humidifying device (15).

## Description

The subject of the invention is a coffee machine comprising a coffee container, a grinder, and a brewing unit. The coffee machine has a humidifying chamber and a humidifying device.

Coffee machines with integrated bean hoppers and grinders are known in the prior art. Preparing coffee with the right aroma and taste is possible thanks to the ability to make a coffee drink from freshly ground beans. To enable this, coffee machines have a grinder that grinds the beans just before brewing. The brewing process takes place after the ground coffee reaches the brewing unit, where coffee is percolated with water at an appropriate temperature and pressure, whose values depend on the type of coffee beverage being prepared. Freshly ground coffee becomes electrostatically charged as a result of the grinding process, in which particles of coffee rub against one another and against grinder components, causing electric potential differences. As a result, the ground coffee does not fall freely from the grinder into the brewing unit and may adhere to the coffee machine components, causing clogging problems in the grinder or hygiene issues when the machine is not used regularly. In extreme cases the grinding mechanism may become blocked. The user must perform additional device-cleaning tasks, which may in turn lead to malfunctions and reduces user convenience. Furthermore, when the coffee is electrostatically charged and adheres to machine parts, it does not fully reach the brewing unit, meaning that not all of the coffee is used in the extraction process. This leads to a less intense coffee flavor and a general reduction in beverage quality. Systematic adhesion of coffee powder to machine parts also increases coffee consumption. Deposition of coffee powder on machine components over time may lead to accumulation of coffee oils that are difficult to remove and can negatively affect coffee taste. There are various methods of treating coffee beans before grinding in the grinder that aim to prepare a coffee beverage with the best possible properties.

The patent document DE 10147284 A1 discloses an automatic coffee machine with a cooling system; it cools the coffee container and grinder components just before the grinding and brewing process. Heat generated during grinding negatively affects the quality of the ground coffee. To lower the coffee temperature, the beans are cooled to between -25°C and -40°C just before being placed in the grinder.

The patent document EP 0386267 B1 discloses a bean cooling system is known. Green coffee beans are roasted and then passed to the grinder. A blower forces air into the main body of the grinder hopper to cool the beans before grinding. The beans are passed with hot water and delivered to the outlet.

The patent document US 2004163546 A1 discloses a coffee machine with a Peltier element whose cold side is placed next to the machine's loading chamber to cool the coffee contained therein. The hot side generates heat that is dissipated by a fan to prevent overheating. A second fan helps cool the air in the loading chamber to ensure that the coffee remains at an appropriate temperature for an extended time.

The object of the invention is to develop a coffee machine in which the coffee beans have appropriate moisture before grinding, resulting in a reduction of the electrostatic charge of the ground coffee subsequently delivered to a brewing unit.

The present invention introduces a coffee machine comprising a coffee container, a grinder and a brewing unit, wherein the coffee machine includes a humidifying chamber and a humidifying device. The humidifying device comprises a nozzle, a water container and a pump that pumps water from the water container to the nozzle. The humidifying chamber is located between the coffee container and the grinder. The coffee machine has a coffee container in which the coffee beans intended for beverage preparation are placed. The coffee container may have a flap facilitating portioning of the beans. Between the outlet of the coffee container and the inlet of the grinder there is the humidifying chamber. During free fall of the beans, the beans are humidified by the humidifying device, which sprays the beans with water. The humidifying device can be designed to wet the beans in the humidifying chamber from multiple sides to ensure even humidifying of the coffee beans. Water intended for spraying the coffee beans in the humidifying chamber is delivered through the nozzle by the pump that pumps water from a dedicated water container containing water for moistening the beans.

Preferably, the nozzle outlet is located in the humidifying chamber. To control the humidifying process of the coffee beans, the nozzle of the humidifying device is located in the humidifying chamber, close to the coffee beans, in order to provide an appropriate moisture level of the beans resulting in a reduction of their electrostatic charge.

Preferably, the humidifying chamber is located between the coffee container and the grinder. The humidifying chamber is located below the coffee container so that the beans fall freely into the humidifying chamber. The grinder is located below the humidifying chamber on the free-fall path of the beans. Thanks to this arrangement, additional beantransporting devices are not necessary, since the coffee reaches the humidifying chamber and then the grinder solely by gravity.

Preferably, the coffee machine has a conveyor for transporting beans to the humidifying chamber. The conveyor may be designed as an auger feeder (screw conveyor) which supplies a portion of beans to the humidifying chamber, where the beans are humidified before passing to the grinder for grinding. The advantage of this solution is gradual feeding of beans to the humidifying chamber, which results in their even humidification. Preferably, the humidifying chamber is designed as a rotating disc with partitions. The rotating disc supplies the coffee beans to the grinder, and during rotation the beans are simultaneously humidified and delivered to the grinder. Use of the disc with partitions ensures simultaneous portioning of the beans intended for grinding and gradual delivery of the beans, which causes their homogeneous moistening.

Advantageously, the humidifying device may also be designed as a nebulizer. The nebulizer may be a jet nebulizer, an ultrasonic nebulizer or a membrane nebulizer. Such nebulizers break the liquid into the fine particles creating aerosol which moistens the coffee efficiently.

The subject of the invention, in exemplary embodiments, is illustrated in the drawing, in which:
- Fig. 1: schematically shows a coffee machine with a humidifying chamber
- Fig. 2: schematically shows a coffee machine with a humidifying chamber and a conveyor
- Fig. 3: schematically shows a coffee machine with a humidifying chamber in the form of a rotating disc with partitions

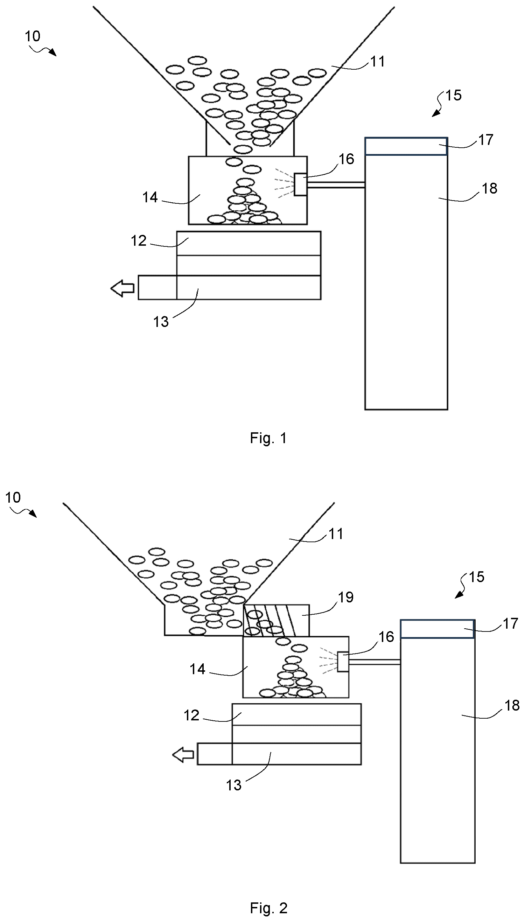

Fig. 1 shows the coffee machine 10 which comprises a coffee container 11, a grinder 12 and a brewing unit 13. A portion of beans measured from the coffee container 11 is ground in the grinder 12 and then brewed in the brewing unit 13. The coffee flows into a cup at the location marked with an arrow. The coffee machine 10 also has a humidifying chamber 14 and a humidifying device 15, which consists of a nozzle 16, a pump 17 and a water container 18. The term "humidifying" can in this embodiment be understood in the sense of "wetting". The humidifying chamber 14 is located beneath the coffee container 11. Coffee is portioned and falls from the coffee container 11 into the humidifying chamber 14 where it is humidified with water pumped from the water container 18 by the pump 17 and sprayed via the nozzle 16 into the humidifying chamber 14. The nozzle 16 is located in the humidifying chamber 14 near the coffee beans. The humidified beans are then directed to the grinder 12, and then the coffee in the form of powder is subjected to the brewing process in the brewing unit 13 and flows out at the location marked with an arrow. Fig. 2 shows the coffee machine 10 comprising the coffee container 11, from which beans are transported to the humidifying chamber 14 by a conveyor 19 in the form of a rotating auger, which transports the beans gradually, allowing them to be humidified evenly in the humidifying chamber 14. The humidifying device 15 consists of the water container 18, the pump 17 and the nozzle 16, the outlet of which is located in the humidifying chamber 14. The ground coffee is transported to the grinder 12, and then to the brewing unit 13 and subsequently to the outlet marked with an arrow.

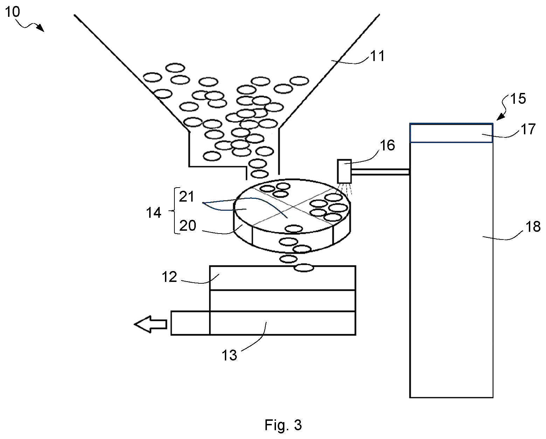

Fig. 3 shows the coffee machine 10 with the humidifying chamber 14 in the form of a rotating disc 20 with partitions 21. The beans fall from the coffee container 11 onto the disc 20 into partitions 21, where they are humidified with water from the nozzle 16 of the humidifying device 15. The humidifying device 15 has the water container 18 and the pump 17, which pumps water to the nozzle 16. The rotating disc 20 portions the coffee and by rotating allows even humidifying of the beans while transporting them to the grinder 12. The ground coffee passes from the grinder 12 to the brewing unit 13 where the brewing process takes place, and then the coffee is served at the outlet marked with an arrow.

### List of reference signs

- 10: coffee machine
- 11: coffee container
- 12: grinder
- 13: brewing unit
- 14: humidifying chamber
- 15: humidifying device
- 16: nozzle
- 17: pump
- 18: water container
- 19: conveyor
- 20: disc
- 21: partition

## Claims

1. A coffee machine (10) comprising a coffee container (11), a grinder (12), and a brewing unit (13), **characterized in that** the coffee machine (10) comprises a humidifying chamber (14) and a humidifying device (15).

2. The coffee machine (10) according to claim 1, **characterized in that** the humidifying device (15) comprises a nozzle (16), a pump (17) and a water container (18).

3. The coffee machine (10) according to claim 1 or 2, **characterized in that** the outlet of the nozzle (16) is located in the humidifying chamber (14).

4. The coffee machine (10) according to any of the preceding claims 1-3, **characterized in that** the humidifying chamber (14) is located between the coffee container (11) and the grinder (12).

5. The coffee machine (10) according to any of the preceding claims 1-3, **characterized in that** it comprises a conveyor (19) for transporting beans to the humidifying chamber (14).

6. The coffee machine (10) according to any of the preceding claims 1-2, **characterized in that** the humidifying chamber (14) has the form of a rotating disc (20) with partitions (21).

7. The coffee machine (10) according to any of the preceding claims, **characterized in that** the humidifying device (15) is a nebulizer.

8. The coffee machine (10) according to any of the preceding claims, **characterized in that** the humidifying device (15) is a jet or ultrasonic or membrane nebulizer.
